# EUROPÄISCHE PATENTSCHRIFT

(11) **EP 3 504 169 B1**
(45) Veröffentlichungstag und Bekanntmachung des Hinweises auf die Patenterteilung: **09.12.2020**
(21) Anmeldenummer: 17761828.7
(22) Anmeldetag: 21.08.2017
(51) Int. Cl.: C04B 35/01, B32B 18/00, G01K 7/16, H01C 7/04, C04B 35/626

(54) **KERAMIKMATERIAL, BAUELEMENT UND VERFAHREN ZUR HERSTELLUNG DES BAUELEMENTS**
CERAMIC MATERIAL, COMPONENT, AND METHOD FOR PRODUCING THE COMPONENT
MATÉRIAU CERAMIQUE, COMPOSANT ET PROCÉDÉ DE FABRICATION DUDIT COMPOSANT

(30) Priorität: 23.08.2016 DE 102016115642
(43) Veröffentlichungstag der Anmeldung: 03.07.2019
(73) Patentinhaber: TDK Electronics AG, 81671 München (DE)
(72) Erfinder: MEAD, Christl Lisa, 8543 St. Martin i. S. (AT); TREUL, Cornelia, 9220 Velden am Wörthersee (AT)
(74) Vertreter: Epping - Hermann - Fischer
(86) Internationale Anmeldenummer: PCT/EP2017/071053
(87) Internationale Veröffentlichungsnummer: WO 2018/036976

(56) Entgegenhaltungen:
- EP-A1- 0 609 776
- CN-A- 105 552 322
- DE-A1- 10 150 248
- DE-A1-102014 102 042
- US-A1- 2002 074 657
- HUIMIN ZHANG ET AL: "Preparation and Characterization of NTC NiMn 2 O 4 -La 1-x Ca x MnO 3 (0<=x<=0.3) Composite Ceramics", ADVANCED MATERIALS RESEARCH, Bd. 71678, 1. Januar 2013 (2013-01-01), Seiten 2013-7, XP055350503, DOI: 10.4028/www.scientific.net/AMR.716.78
- GHOSH K ET AL: "TRANSITION-ELEMENT DOPING EFFECTS IN LA0.7CA0.3MNO3", PHYSICAL REVIEW, B. CONDENSED MATTER, AMERICAN INSTITUTE OF PHYSICS. NEW YORK, US, Bd. 59, Nr. 1, PART 01, 1. Januar 1999 (1999-01-01), Seiten 533-537, XP000868905, ISSN: 0163-1829, DOI: 10.1103/PHYSREVB.59.533
- M.N. MURALIDHARAN ET AL: "Effect of Cu and Fe addition on electrical properties of Ni-Mn-Co-O NTC thermistor compositions", CERAMICS INTERNATIONAL, Bd. 38, Nr. 8, 1. Dezember 2012 (2012-12-01), Seiten 6481-6486, XP055182721, ISSN: 0272-8842, DOI: 10.1016/j.ceramint.2012.05.025

## Beschreibung

Die Anmeldung betrifft ein Keramikmaterial mit negativem Temperaturkoeffizienten gemäß Anspruch 1, ein Bauelement gemäß Anspruch 5, das das Keramikmaterial enthält, sowie ein Verfahren gemäß Anspruch 10 zur Herstellung des Bauelements.

Temperaturen für die Überwachung und Regelung in unterschiedlichen Anwendungen werden vorwiegend mit keramischen Heißleiter-Thermistorelementen (NTC), Siliziumtemperatursensoren (KTY), Platin-Temperatursensoren (PRTD) oder Thermoelementen (TC) gemessen. Dabei sind aufgrund der geringen Herstellungskosten die NTC-Thermistoren basierend auf beispielsweise Spinellstrukturen am weitesten verbreitet. Ein weiterer Vorteil gegenüber Thermoelementen und metallischen Widerstandselementen wie zum Beispiel Platinelementen besteht in der ausgeprägten negativen Widerstands-Temperatur-Charakteristik.

Die ständig steigenden Anforderungen an Temperatursensoren hinsichtlich ihrer elektrischen Eigenschaften und Miniaturisierung der Bauteilgeometrie erfordern Keramikmaterialien mit höheren B-Werten und geringen spezifischen Widerstandswerten. Für die Herstellung von Sensoren mit niedrigen realen Widerstandswerten und gleichzeitig steiler Kennlinie werden herkömmlich entweder getrimmte Scheiben oder Chips mit vergleichsweise großen Bauteilgeometrien mit einem Volumen von bis zu 2,6 cm³ eingesetzt. Mit fortschreitenden Miniaturisierungsanforderungen müssen die Bauteildimensionen der NTC-Keramiken deutlich verkleinert werden. Bislang wurden Keramikmassen mit beispielsweise Kupferoxid dotiert, um spezifische Widerstände von weniger als 200 Ωcm realisieren zu können. Dabei wurde jedoch gleichzeitig der B-Wert auf Werte von weniger als 3000 K erniedrigt und das Driftverhalten von etwa 2 % auf 5 bis 10 % erhöht.

Aufgabe mindestens einer Ausführungsform ist es, ein Keramikmaterial mit verbesserten Eigenschaften anzugeben. Eine weitere Aufgabe mindestens einer Ausführungsform ist es, ein Bauelement mit verbesserten Eigenschaften anzugeben. Eine weitere Aufgabe mindestens einer Ausführungsform ist es, ein Verfahren zur Herstellung eines Bauelements mit verbesserten Eigenschaften anzugeben. Diese Aufgaben werden durch ein Keramikmaterial, ein Bauelement und ein Verfahren gemäß den unabhängigen Ansprüchen gelöst. Weitere Ausführungsformen sind Gegenstand abhängiger Ansprüche.

Es wird ein Keramikmaterial mit negativem Temperaturkoeffizienten des elektrischen Widerstands angegeben. Dieses weist eine Struktur auf, die auf einem System basiert, das aus Ni-Co-Mn-O, Ni-Mn-O und Co-Mn-O ausgewählt ist. Das Keramikmaterial umfasst weiterhin zumindest einen Dotierstoff, der aus der Gruppe der Lanthanoide ausgewählt ist. Ni-Co-Mn-O ist dabei gleichbedeutend mit Ni-Mn-Co-O und Co-Mn-O ist gleichbedeutend mit Mn-Co-O.

Unter einem Keramikmaterial mit negativem Temperaturkoeffizienten (NTC) des elektrischen Widerstands soll hier und im Folgenden ein Material verstanden werden, das bei hohen Temperaturen elektrischen Strom besser leitet als bei tiefen Temperaturen. Solche Materialien können auch als Heißleiter bezeichnet werden.

Darunter, dass das Keramikmaterial auf einem System basiert, das aus Ni-Co-Mn-O, Ni-Mn-O und Co-Mn-O ausgewählt ist, soll verstanden werden, dass das Keramikmaterial jeweils mindestens Ni, Co, Mn und O beziehungsweise Ni, Mn und O beziehungsweise Mn, Co und O aufweist, wobei die einzelnen Elemente in unterschiedlich hohen Anteilen in dem Keramikmaterial vorhanden sein können und wobei das jeweilige System weitere Elemente umfassen kann. Die Elemente eines Systems bilden dabei jeweils eine bestimmte Struktur, in deren Gitter der zumindest eine Dotierstoff eingebaut sein kann.

Ein solches Keramikmaterial weist entkoppelte elektrische Eigenschaften auf. Das bedeutet, dass mit dem Keramikmaterial zumindest in einem bestimmten Bereich ein hoher B-Wert bei gleichzeitig niedrigem spezifischen Widerstand p realisiert werden kann. Im Gegensatz dazu liegt bei konventionellen NTC-Keramiken ein linearer Zusammenhang zwischen dem spezifischen Widerstand p und dem B-Wert vor. Beispielsweise weist ein herkömmliches NTC-Bauteil bei einem B-Wert von zirka 4000 K einen spezifischen Widerstand p von etwa 2500 Ωcm auf. Hingegen kann mit einem erfindungsgemäßen Keramikmaterial ein hoher B-Wert von bis zu 4000 K bei gleichzeitig geringen spezifischen Widerstandswerten von 200 Ωcm bis 500 Ωcm realisiert werden.

Die Entkopplung der elektrischen Eigenschaften kann durch die Zugabe des zumindest einen Dotierstoffs, der aus den Lanthanoiden ausgewählt ist, erreicht werden. Die niedrigen spezifischen Widerstände ermöglichen eine Miniaturisierung von Bauelementen, die das Keramikmaterial enthalten, um einen Faktor von mindestens 20 im Vergleich zu herkömmlichen Bauelementen mit NTC-Keramiken.

Durch die Entkopplung der elektrischen Eigenschaften des erfindungsgemäßen Keramikmaterials können somit hohe B-Werte bei niedrigen spezifischen Widerstandswerten erreicht werden und gleichzeitig weisen solche Keramikmaterialien eine hohe Langzeitstabilität mit Driftwerten von weniger als 0,5 % über einen Zeitraum von mindestens 1000 Stunden in einem Temperaturbereich von beispielsweise 70°C bis 300°C auf.

Gemäß einer Ausführungsform ist der Dotierstoff aus Praesodym (Pr), Neodym (Nd) und Kombinationen daraus ausgewählt. Mit diesen Dotierstoffen kann die beschriebene Entkopplung der elektrischen Eigenschaften besonders gut erzielt werden.

Der Dotierstoff ist mit einem Anteil von bis zu einschließlich 10 mol% in dem Keramikmaterial enthalten. Die Menge des zugegebenen Dotierstoffs in dem Keramikmaterial kann die Steilheit der Kennlinien beeinflussen.

Das Keramikmaterial kann gemäß einer Ausführungsform ein System aufweisen, das weiterhin zumindest ein Element enthält, das ausgewählt ist aus Al, Fe, Cu, Zn, Ca, Zr, Ti, Mg, Sr und Kombinationen davon. Das Keramikmaterial weist eine Spinellstruktur auf.

Die Spinellstruktur weist die allgemeine Formel AB₂O₄ auf. Dabei gilt:
- A ist ausgewählt aus Ni, Co, Mn, Mg, Sr, Zn, Ca, Zr, Cu und Kombinationen daraus,
- B ist ausgewählt aus Mn, Co, Al, Fe, Ti und Kombinationen daraus,
- A umfasst zumindest Ni und B umfasst zumindest Mn oder A umfasst zumindest Ni und B umfasst zumindest Mn und Co oder A umfasst zumindest Mn oder Co und B umfasst zumindest Co oder Mn.

Die allgemeine Formel der Spinellstruktur ist hier und im Folgenden als Basisformel mit einer A-Position und einer B-Position zu verstehen, die nicht die exakten stöchiometrischen Verhältnisse der einzelnen Komponenten des Keramikmaterials wiedergeben muss.

Gemäß der allgemeinen Formel entspricht A einem oder mehreren zweiwertigen Elementen. B entspricht einem oder mehreren Elementen, die gemischte Valenzen aufweisen können, beispielsweise zwei-, drei- oder vierwertig. Somit kann die allgemeine Formel beispielsweise auch mit A₁₋ₓ²⁺Bₓ²⁺(Aₓ²⁺B₂₋₂ₓ³⁺Bₓ⁴⁺)O₄ beschrieben werden, wobei der Index x aus dem Bereich 0 bis 1 ausgewählt sein kann. Für x = 0 resultiert die allgemeine Formel A²⁺B₂³⁺O₄.

In jedem Fall enthält die Spinellstruktur Ni und Mn oder Ni, Mn und Co oder Mn und Co.

Weiterhin kann der Dotierstoff auf der B-Position der Spinellstruktur angeordnet sein.

Die Spinellstruktur kann weiterhin ausgewählt sein aus NiMn₂O₄, Ni²⁺Mn³⁺Co³⁺O₄, MnCo₂O₄ und CoMn₂O₄. Basierend auf einer solchen Struktur kann das Keramikmaterial somit beispielsweise ausgewählt sein aus Co_{1,5-0,5a}Mn_{1,5-0,5a}PrₐO₄, Co_{1,8-0,5a}Mn_{1,2-0,5a}PrₐO₄ und Ni_{0,97-0,33a}Mn_{1,21-0}, ₃₃ₐFe_{0,82-0,33a}PrₐO₄. Dabei gilt jeweils 0 < a ≤ 0,3.

Die Basisrezeptur des Keramikmaterials wird entsprechend des gewünschten B-Wertverlaufs ausgewählt. Durch Zugabe des Dotierstoffs zu der jeweiligen Basisrezeptur kann dann der Wert des spezifischen Widerstands p eingestellt werden.

Es wird weiterhin ein Bauelement angegeben, das einen keramischen Grundkörper aufweist, der ein Keramikmaterial gemäß den obigen Ausführungen enthält. Sämtliche Merkmale, die in Bezug auf das Keramikmaterial angegeben sind, gelten somit auch für das Bauelement und umgekehrt.

Weiterhin enthält das Bauelement zumindest zwei Elektroden, die auf dem keramischen Grundkörper angeordnet sind. Das Bauelement kann weiterhin eine Verkapselung aufweisen, die zumindest den keramischen Grundkörper, insbesondere den keramischen Grundkörper und die Elektroden vollständig umgibt. Die Elektroden können mit Anschlussdrähten elektrisch kontaktiert sein, wobei die Anschlussdrähte ebenfalls von der Verkapselung umgeben sein können.

Gemäß einer Ausführungsform ist das Bauelement ein Temperatursensor. Damit kann ein Temperatursensor (NTC-Thermistor) realisiert werden, der eine verringerte Bauteilgröße aufweisen kann, da er das Keramikmaterial mit entkoppelten elektrischen Eigenschaften enthält.

Gemäß einer Ausführungsform weist der keramische Grundkörper ein Volumen auf, das aus dem Bereich inklusive 0,03 cm³ bis inklusive 0,23 cm³ ausgewählt ist. Damit können wesentlich kleinere keramische Grundkörper bei gleichen realen Widerständen R₂₅ im Vergleich zu bisherigen Bauteilen realisiert werden. Durch die damit verbundene Reduzierung der Größe des Bauelements, beispielsweise des Temperatursensors, können aus einer gleichen Grundmenge an keramischem Material mehr keramische Grundkörper produziert werden, was einen Kostenvorteil mit sich bringt und gegebenenfalls höhere Kosten für die Rohstoffe auffängt.

Gemäß einer weiteren Ausführungsform kann der keramische Grundkörper einen realen Widerstand R₂₅ aufweisen, der aus einem Bereich von 2000 Ω bis 3000 Ω ausgewählt ist. Weiterhin kann der keramische Grundkörper einen B-Wert aufweisen, der aus einem Bereich von 3500 K bis 4300 K ausgewählt ist. Insbesondere kann der B-Wert bei 4000 K liegen.

Weiterhin kann das Bauelement eine Verkapselung aufweisen. Die Verkapselung des Bauelements kann gemäß einer Ausführungsform Glas oder ein Polymer enthalten. Damit wird das Bauelement ausreichend mechanisch stabilisiert und gegen äußere Einflüsse geschützt. Weiterhin kann eine Korrosion durch aggressive Medien vermieden werden. Die Verkapselung kann in Form einer Beschichtung auf zumindest dem keramischen Grundkörper angeordnet sein.

Es wird weiterhin ein Verfahren zur Herstellung des Bauelements, das einen keramischen Grundkörper, der ein Keramikmaterial gemäß den obigen Ausführungen enthält, aufweist, bereitgestellt. Sämtliche in Bezug auf das Keramikmaterial und das Bauelement offenbarten Merkmale gelten somit auch für das Verfahren und umgekehrt.

Das Verfahren weist die Schritte Herstellung eines Pulvers, das Ausgangsmaterialien des Keramikmaterials enthält, Herstellung einer Folie aus dem Pulver, Herstellung von Substraten enthaltend das Keramikmaterial aus der Folie, und Vereinzeln der Substrate auf.

Der Schritt "Herstellung eines Pulvers, das Ausgangsmaterialien des Keramikmaterials enthält" kann beispielsweise die Teilschritte Einwaage der Ausgangsmaterialien, deren erste Nassmahlung, erste Trocknung, erste Siebung, Kalzination, zweite Nassmahlung, zweite Trocknung und zweite Siebung umfassen. Die Herstellung des Pulvers kann nach dem Mixed-Oxide-Verfahren erfolgen.

Bei der Herstellung des Pulvers können die Ausgangsmaterialien des zumindest einen Dotierstoffs beispielsweise in Form von Oxiden, Hydroxiden, Carbonaten, Nitraten, Sulfaten und/oder Oxalaten zu den übrigen Ausgangsmaterialien zugegeben werden. Die übrigen Ausgangsmaterialien können ebenfalls Oxide, Hydroxide, Carbonate, Nitrate, Sulfate und/oder Oxalate, je nach Zusammensetzung des Keramikmaterials, der Elemente Ni, Co, Mn Al, Fe, Cu, Zn, Ca, Zr, Ti, Mg, Sr sein.

Durch die Zugabe der Dotierstoffe zu dem Keramikmaterial wird eine Herabsetzung des spezifischen Widerstandes p erreicht, wobei der B-Wert nicht in gleichem Maße beeinflusst wird. Mit Hilfe des Einsatzes von Lanthanoiden als Dotierstoffe wird das typische lineare B-ρ-Verhalten zumindest bereichsweise entkoppelt.

Der Verfahrensschritt "Herstellung einer Folie aus dem Pulver" kann die Teilschritte Einwaage von organischen Komponenten, des Pulvers und von Lösungsmittel, Schlickeraufbereitung, Mahlung, Entgasung und Folienziehen umfassen.

Der Schritt "Herstellung von Substraten enthaltend das Keramikmaterial aus der Folie" kann die Teilschritte Stapeln, Pressen und Schneiden der Folie, Entkohlen, Sintern, Läppen, Tempern, Metallisieren zum Anbringen der zumindest zwei Elektroden und elektrisches Vormessen umfassen. Schließlich wird das Bauelement durch Vereinzeln der Substrate hergestellt.

Die Teilschritte Sintern, Tempern und Metallisieren sind Temperaturprozesse, die die Steilheit der Kennlinien des Keramikmaterials beziehungsweise des Bauelements, das das Keramikmaterial enthält, beeinflussen können. Das Sintern kann dabei bei einer Temperatur erfolgen, die aus dem Bereich einschließlich 1100°C bis einschließlich 1300°C ausgewählt ist. Das Tempern kann bei einer Temperatur erfolgen, die aus dem Bereich einschließlich 900°C bis einschließlich 1100°C ausgewählt ist. Die Haltezeit beim Sintern kann zwischen einschließlich 2h bis einschließlich 8h ausgewählt sein, die Haltezeit beim Tempern kann zwischen einschließlich 1h bis einschließlich 72h ausgewählt sein. Das Metallisieren, bei dem die Elektroden eingebrannt werden, kann bei einer Temperatur erfolgen, die aus dem Bereich einschließlich 700°C bis einschließlich 900°C ausgewählt ist mit einer Haltezeit, die aus dem Bereich einschließlich 10 min bis einschließlich 60 min ausgewählt ist.

Somit kann mit dem Verfahren kostengünstig und materialsparend ein Bauelement, beispielsweise ein Temperatursensor, mit geringer Bauteilgröße hergestellt werden, dessen keramischer Grundkörper zumindest bereichsweise entkoppelte elektrische Eigenschaften aufweist.

Im Folgenden werden das hier beschriebene Keramikmaterial und das Bauelement anhand von Ausführungsbeispielen und den dazugehörigen Figuren näher erläutert.
- Figur 1: zeigt den Zusammenhang zwischen spezifischem Widerstand p und dem B-Wert anhand von Ausführungsbeispielen,
- Figuren 2A und 2B: zeigen den Einfluss der zugegebenen Menge an Dotierstoff l in Abhängigkeit der Basisrezeptur des Keramikmaterials auf den B-Wert und auf den spezifischen Widerstand ρ anhand von Ausführungsbeispielen,
- Figuren 3A bis 3C: zeigen das Driftverhalten des Keramikmaterials unter verschiedenen Bedingungen,
- Figur 4: zeigt schematische Seitenansichten von Bauelementen.

Gleiche, gleichartige oder gleich wirkende Elemente in den Figuren sind mit denselben Bezugszeichen versehen. Die Figuren und die Größenverhältnisse der in den Figuren dargestellten Elemente untereinander sind nicht als maßstäblich zu betrachten. Vielmehr können einzelne Elemente zur besseren Darstellbarkeit und/oder zum besseren Verständnis übertrieben groß dargestellt sein.

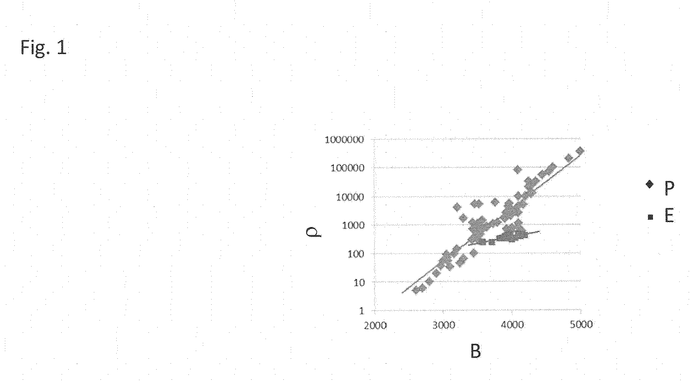

Figur 1 zeigt den Zusammenhang zwischen dem spezifischen Widerstand ρ und dem B-Wert für herkömmliche, undotierte NTC-Keramiken (P), die auf den Systemen NiMnCoO₄ und NiMn₂O₄ basieren, und für die Ausführungsbeispiele von dotierten Keramikmaterialien Co_{1,5-0,5a}Mn_{1,5-0,5a}PrₐO₄, Co_{1,8-0,5a}Mn_{1,2-0,5a}PrₐO₄ und Ni_{0,97-0,33a}Mn_{1,21-0,33a}Fe_{0,82-0}, ₃₃ₐPrₐO₄ mit 0 < a ≤ 0,3 (E). Auf der x-Achse ist dabei der B-Wert in K angegeben, auf der y-Achse der spezifische Widerstand p in Ωcm. Die Rauten P zeigen dabei die Werte für herkömmliche NTC-Keramiken, die Quadradte E zeigen die Werte der Ausführungsbeispiele des Keramikmaterials.

In Figur 1 wird ersichtlich, dass für die mit einem Lanthanoid dotierten Keramikmaterialien (E) über einen B-Wert-Bereich von 3500 K bis 4300 K spezifische Widerstandswerte p von 200 Ωcm bis 500 Ωcm eingestellt werden können. In dem gleichen B-Wert-Bereich liegen die spezifischen Widerstandswerte p für herkömmliche NTC-Keramiken (P) zwischen 500 Ωcm und 20000 Ωcm.

Die niedrigen spezifischen Widerstandswerte der mit Lanthanoid dotierten Keramikmaterialien haben den Vorteil, dass im Gegensatz zu den bisherigen NTC-Keramikzusammensetzungen wesentlich kleinere Bauformen bei gleichen realen Widerständen realisierbar sind. Durch die damit verbundene Reduzierung der Bauteilgrößen können aus der gleichen Grundmenge an Keramikmaterial mehr NTC-Keramikkörper, die das Keramikmaterial enthalten, produziert werden. Dies bringt einen Kostenvorteil mit sich und fängt höhere Kosten der Rohstoffe auf.

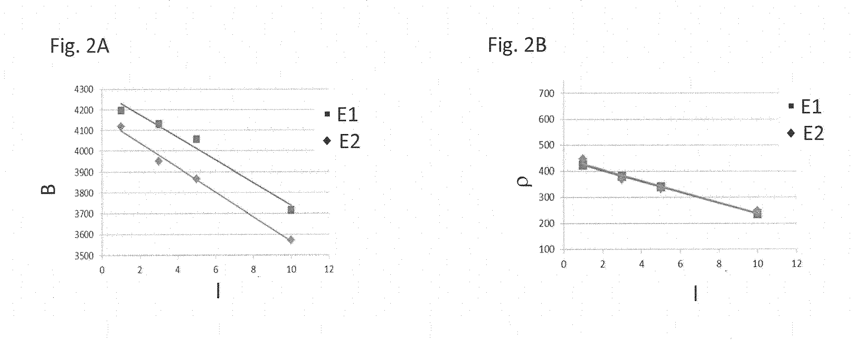

Die Figuren 2A und 2B zeigen den Einfluss der zugegebenen Menge an Dotierstoff l in Abhängigkeit der Basisrezeptur des Keramikmaterials auf den B-Wert (Figur 2A) und auf den p-Wert (Figur 2B). Auf der x-Achse ist jeweils die Zugabemenge l in mol% angegeben. Die y-Achse der Figur 2A stellt den B-Wert in K dar, die y-Achse der Figur 2B zeigt den spezifischen Widerstand p in Ωcm.

Die beiden Basisrezepturen werden jeweils mit Quadraten E1 (Basisrezeptur 1) und Rauten E2 (Basisrezeptur 2) angegeben. Unter Basisrezeptur ist jeweils die Zusammensetzung des Keramikmaterials zu verstehen, zu der unterschiedliche Mengen l an Dotierstoff zugegeben werden. Bei der Basisrezeptur E1 handelt es sich um Co_{1,5-0,5a}Mn-_{1,5-0,5a}PrₐO₄ mit 0 < a ≤ 0,3, bei der Basisrezeptur E2 handelt es sich um Co_{1,8-0,5a}Mn_{1,2-0,5a}PrₐO₄ mit 0 < a ≤ 0,3.

Die Figuren 2A und 2B verdeutlichen, dass durch die Wahl der Basisrezeptur E1 oder E2, zu der die Dotierstoffe zugegeben werden, die B-Wertlage verändert werden kann (Figur 2A), wobei gleichzeitig der spezifische Widerstand p unabhängig von der Basisrezeptur bleibt (Figur 2B).

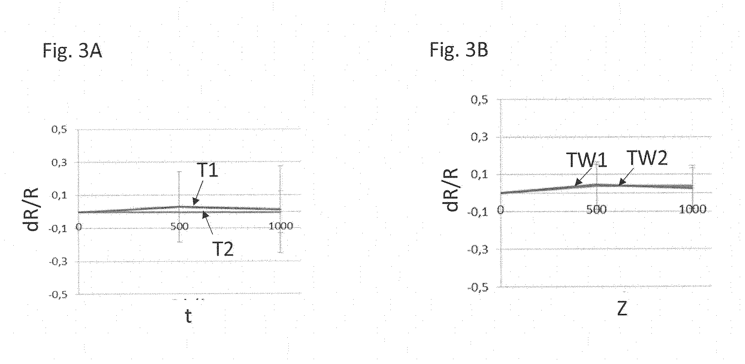

Die Figuren 3A bis 3C zeigen das Driftverhalten des Keramikmaterials anhand eines Ausführungsbeispiels unter verschiedenen Bedingungen. Das Driftverhalten wird anhand von glasgekapselten NTC-Temperatursensoren, die das mit Lanthanoid dotierte Keramikmaterial enthalten, ermittelt. Das mit Lanthanoid dotierte Keramikmaterial weist eine Struktur auf, die auf dem System Ni-Co-Mn-O, Ni-Mn-O oder Co-Mn-O basiert. In den Systemen kann optional noch Al, Fe, Cu, Zn, Ca, Zr, Ti, Mg, Sr und Kombinationen davon enthalten sein und das System weist eine Spinellstruktur auf. Das Keramikmaterial weist eine Dotierstoffkonzentration von bis zu 10 mol% auf. Der Dotierstoff ist bevorzugt Pr, Nd oder Kombinationen davon. Beispielsweise kann es sich dabei um Co_{1,5-0,5a}Mn_{1,5-0,5a}PrₐO_{4,} CO_{1,8-0,5a}Mn_{1,2-0,5a}PrₐO₄ oder Ni_{0,97-0,33a}Mn_{1,21-0,33a}Fe_{0,82-0,33a}PrₐO₄ mit jeweils 0 < a ≤ 0,3 handeln.

Figur 3A zeigt das Driftverhalten dR/R in % in Abhängigkeit der Zeit t in Stunden h. T1 zeigt das Verhalten des Keramikmaterials bei einer ersten Temperaturlagerungbedingung in trockner Wärme bei 155 °C, T2 zeigt das Verhalten bei einer zweiten Temperaturlagerungbedingung in trockner Wärme bei 300 °C. Bei beiden Temperaturlagerungsbedingungen T1 und T2 zeigt das Keramikmaterial ein äußerst geringes Driftverhalten von unter 0,5 %, auch nach 1000 Stunden.

Figur 3B zeigt das Driftverhalten dR/R in % bei einem raschen Temperaturwechsel. Die x-Achse in Figur 3B zeigt die Anzahl der Zyklen Z des Temperaturwechsels. TW1 zeigt das Verhalten bei einem raschen Temperaturwechsel (erste Temperaturwechselbedingung) von -55 °C auf 155 °C, TW2 zeigt das Verhalten bei einem raschen Temperaturwechsel (zweite Temperaturwechselbedingung) von -55 °C auf 200 °C. Sowohl bei der Bedingung TW1 als auch bei der Bedingung TW2 kann keine Änderung des Widerstands R beobachtet werden.

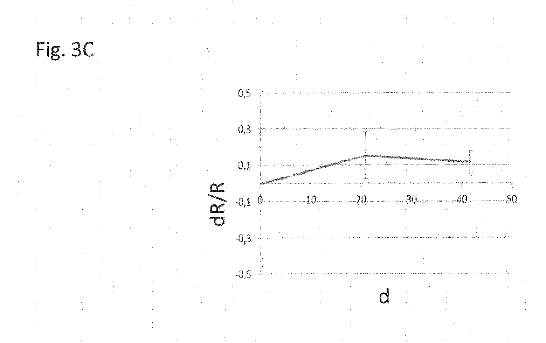

Figur 3C zeigt den Einfluss der Lagerung bei feuchter Wärme auf das Driftverhalten dR/R. Dieses ist wieder in % auf der y-Achse angegeben. Die x-Achse zeigt Anzahl der Tage d. Die Lagerung findet bei einer Temperatur von 85 °C und 85 % relativer Luftfeuchtigkeit statt. Auch unter dieser Bedingung liegt das beobachtete Driftverhalten unterhalb von 0,5 %.

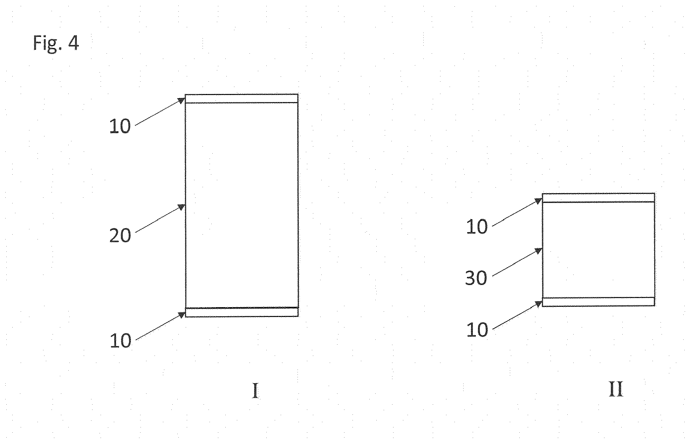

Figur 4 zeigt die schematische Seitenansicht eines herkömmlichen Bauelements (I) im Vergleich zu einem Ausführungsbeispiel eines Bauelements (II). Beide Bauelemente enthalten Elektroden 10. Das herkömmliche Bauelement I enthält weiterhin den keramischen Grundkörper 20, welcher ein Volumen von 1,8 bis 3,4 cm³ aufweist. Im Vergleich dazu weist der keramische Grundkörper 30 des Ausführungsbeispiels des Bauelements II ein Volumen von 0,03 bis 0,23 cm³ auf. Beide Bauelemente haben einen Widerstand R₂₅ von 2200 Ω und einen B-Wert von 3500 bis 4300 K. Das Bauelement I weist einen spezifischen Widerstand p von 1500 bis 3000 Ωcm auf, das Bauelement II von 200 bis 500 Ωcm. Die Bauelemente I und II können weiterhin Verkapselungen aus beispielsweise Glas oder Polymer enthalten (hier nicht gezeigt).
Der keramische Grundkörper 30 des Bauelements II enthält ein mit Lanthanoid dotiertes Keramikmaterial, das eine Struktur aufweist, die auf dem System Ni-Co-Mn-O, Ni-Mn-O oder Co-Mn-O basiert. In den Systemen kann optional jeweils noch Al, Fe, Cu, Zn, Ca, Zr, Ti, Mg, Sr und Kombinationen davon enthalten sein und das System weist eine Spinellstruktur auf. Das Keramikmaterial weist eine Dotierstoffkonzentration von bis zu 10 mol% auf. Der Dotierstoff ist bevorzugt Pr, Nd oder Kombinationen davon. Beispielsweise handelt es sich bei dem Keramikmaterial um Co_{1,5-0},₅ₐMn_{1,5-0},₅ₐPrₐO₄, Co_{1,8-0},₅ₐMn_{1,2-0,5a}PrₐO₄ oder Ni_{0,97-0,33a}Mn_{1,21-0},₃₃ₐFe_{0,82-0,33a}PrₐO₄ mit jeweils 0 < a ≤ 0,3.

Damit kann gezeigt werden, dass aufgrund der Wahl des Keramikmaterials die Bauteilgröße drastisch reduziert werden kann und gleichzeitig hohe B-Werte bei niedrigen spezifischen Widerständen realisiert werden können.

Die Erfindung ist nicht durch die Beschreibung anhand der Ausführungsbeispiele beschränkt.

### Bezugszeichenliste

- 10: Elektrode
- 20: keramischer Grundkörper
- 30: keramischer Grundkörper
- p: spezifischer Widerstand
- B: B-Wert
- l: zugegebene Menge an Dotierstoff
- P: herkömmliches Keramikmaterial
- E: Ausführungsbeispiele von Keramikmaterialien
- E1: Keramikmaterial Co_{1,5-0,5a}Mn_{1,5-0,5a}PrₐO₄
- E2: Keramikmaterial Co_{1,8-0,5a}Mn_{1,2-0,5a}PrₐO₄
- t: Zeit
- Z: Zyklenanzahl
- T1: erste Temperaturlagerungsbedingung
- T2: zweite Temperaturlagerungsbedingung
- dR/R: Änderung des Widerstands
- TW1: erste Temperaturwechselbedingung
- TW2: zweite Temperaturwechselbedingung
- d: Tage

## Patentansprüche

1. Keramikmaterial mit negativem Temperaturkoeffizienten des elektrischen Widerstands aufweisend eine Struktur, die auf einem System basiert, das aus Ni-Co-Mn-O, Ni-Mn-O und Co-Mn-O ausgewählt ist, und zumindest einen Dotierstoff umfasst, der aus der Gruppe der Lanthanoide ausgewählt ist, und der einen Anteil von bis zu einschließlich 10 mol% in dem Keramikmaterial hat,
wobei das Keramikmaterial eine Spinellstruktur der allgemeinen Formel AB₂O₄ aufweist und wobei gilt:
- A ist ausgewählt aus Ni, Co, Mn, Mg, Sr, Zn, Ca, Zr, Cu und Kombinationen daraus,
- B ist ausgewählt aus Mn, Co, Al, Fe, Ti und Kombinationen daraus,
- A umfasst zumindest Ni und B umfasst zumindest Mn oder A umfasst zumindest Ni und B umfasst zumindest Mn und Co oder A umfasst zumindest Mn oder Co und B umfasst zumindest Co oder Mn,
wobei der Dotierstoff auf der B-Position der Spinellstruktur angeordnet ist.

2. Keramikmaterial nach dem vorhergehenden Anspruch, wobei der Dotierstoff aus Pr, Nd und Kombinationen daraus ausgewählt ist.

3. Keramikmaterial nach einem der vorhergehenden Ansprüche wobei das System weiterhin zumindest ein Element enthält, das ausgewählt ist aus Al, Fe, Cu, Zn, Ca, Zr, Ti, Mg, Sr und Kombinationen davon.

4. Keramikmaterial nach einem der vorhergehenden Ansprüche, wobei die Spinellstruktur ausgewählt ist aus NiMn₂O₄, Ni²⁺Mn³⁺Co³⁺O₄, MnCo₂O₄ und CoMn₂O₄.

5. Bauelement aufweisend einen keramischen Grundkörper (30), der ein Keramikmaterial gemäß den vorhergehenden Ansprüchen enthält und zumindest zwei Elektroden (10), die auf dem keramischen Grundkörper (30) angeordnet sind.

6. Bauelement nach dem vorhergehenden Anspruch, das ein Temperatursensor ist.

7. Bauelement nach einem der Ansprüche 5 oder 6, wobei der keramische Grundkörper (30) ein Volumen aufweist, das aus dem Bereich inklusive 0,03 cm³ bis inklusive 0,23 cm³ ausgewählt ist.

8. Bauelement nach einem der Ansprüche 5 bis 7, wobei der keramische Grundkörper (30) einen Widerstand R₂₅ aufweist, der aus einem Bereich von 2000 Ω bis 3000 Ω ausgewählt ist, und einen B-Wert, der aus einem Bereich von 3500 K bis 4300 K ausgewählt ist, aufweist.

9. Bauelement nach einem der Ansprüche 5 bis 8, weiterhin aufweisend eine Verkapselung, wobei die Verkapselung Glas oder ein Polymer enthält.

10. Verfahren zur Herstellung eines Bauelements gemäß den Ansprüchen 5 bis 9, mit den Schritten
- Herstellung eines Pulvers, das Ausgangsmaterialien des Keramikmaterials enthält,
- Herstellung einer Folie aus dem Pulver,
- Herstellung von Substraten enthaltend das Keramikmaterial aus der Folie, und
- Vereinzeln der Substrate.

11. Verfahren nach dem vorhergehenden Anspruch, wobei zur Herstellung des Pulvers Ausgangsmaterialien des zumindest einen Dotierstoffs in Form von Oxiden, Hydroxiden, Carbonaten, Nitraten, Sulfaten und/oder Oxalaten zu den übrigen Ausgangsmaterialien zugegeben werden.

## Claims

1. Ceramic material with negative temperature coefficient of the electrical resistance, having a structure that is based on a system selected from Ni-Co-Mn-O, Ni-Mn-O and Co-Mn-O and comprises at least one dopant which is selected from the group of the lanthanoids and is present in a proportion of up to 10 mol% inclusive in the ceramic material,
wherein the ceramic material has a spinel structure of the general formula AB₂O₄, where:
- A is selected from Ni, Co, Mn, Mg, Sr, Zn, Ca, Zr, Cu and combinations thereof,
- B is selected from Mn, Co, Al, Fe, Ti and combinations thereof,
- A comprises at least Ni and B comprises at least Mn or A comprises at least Ni and B comprises at least Mn and Co or A comprises at least Mn or Co and B comprises at least Co or Mn,
wherein the dopant is disposed at the B position of the spinel structure.

2. Ceramic material according to the preceding claim, wherein the dopant is selected from Pr, Nd and combinations thereof.

3. Ceramic material according to either of the preceding claims, wherein the system further contains at least one element selected from Al, Fe, Cu, Zn, Ca, Zr, Ti, Mg, Sr and combinations thereof.

4. Ceramic material according to either of the preceding claims, wherein the spinel structure is selected from NiMn₂O₄, Ni²⁺Mn³⁺Co³+O₄, MnCo₂O₄ and CoMn₂O₄.

5. Component having a ceramic base element (30) which contains a ceramic material according to the preceding claims and at least two electrodes (10) which are disposed on the ceramic base element (30) .

6. Component according to the preceding claim which is a temperature sensor.

7. Component according to any of claims 5 or 6, wherein the ceramic base element (30) has a volume selected from the range of 0.03 cm³ inclusive to 0.23 cm³ inclusive.

8. Component according to any of claims 5 to 7, wherein the ceramic base element (30) has a resistance R₂₅ selected from a range of from 2000 Ω to 3000 Ω and a B value selected from a range from 3500 K to 4300 K.

9. Component according to any of claims 5 to 8, further comprising an encapsulation, wherein the encapsulation contains glass or a polymer.

10. Method for producing a component according to claims 5 to 9, comprising the steps
- production of a powder containing starting materials of the ceramic material,
- production of a film from the powder,
- production of substrates containing the ceramic material from the film, and
- separation of the substrates.

11. Method according to the preceding claim, wherein in order to produce the powder, starting materials of the at least one dopant in the form of oxides, hydroxides, carbonates, nitrates, sulfates and/or oxalates are added to the other starting materials.

## Revendications

1. Matériau céramique doté d'un coefficient de température négatif de la résistance électrique, présentant une structure qui est basée sur un système qui est choisi parmi Ni-Co-Mn-O, Ni-Mn-O et Co-Mn-O, et qui comprend au moins un dopant qui est choisi dans le groupe des lanthanides et qui possède une proportion allant jusqu'à 10 % en moles inclus du matériau céramique,
le matériau céramique présentant une structure de spinelle de formule générale AB₂O₄ et ce qui suit s'appliquant :
- A est choisi parmi Ni, Co, Mn, Mg, Sr, Zn, Ca, Zr, Cu et des combinaisons de ceux-ci,
- B est choisi parmi Mn, Co, Al, Fe, Ti et des combinaisons de ceux-ci,
- A comprend au moins Ni et B comprend au moins Mn ou A comprend au moins Ni et B comprend au moins Mn et Co ou A comprend au moins Mn ou Co et B comprend au moins Co ou Mn,
le dopant étant disposé sur la position B de la structure de spinelle.

2. Matériau céramique selon la revendication précédente, le dopant étant choisi parmi Pr, Nd et des combinaisons de ceux-ci.

3. Matériau céramique selon l'une quelconque des revendications précédentes, le système contenant en outre au moins un élément qui est choisi parmi Al, Fe, Cu, Zn, Ca, Zr, Ti, Mg, Sr et des combinaisons de ceux-ci.

4. Matériau céramique selon l'une quelconque des revendications précédentes, la structure de spinelle étant choisie parmi NiMn₂O₄, Ni²⁺Mn³⁺CO³⁺O₄, MnCO₂O₄ et CoMn₂O₄.

5. Composant présentant un corps de base céramique (30), qui contient un matériau céramique selon les revendications précédentes et au moins deux électrodes (10), qui sont disposées sur le corps de base céramique (30).

6. Composant selon la revendication précédente, qui est un capteur de température.

7. Composant selon l'une quelconque des revendications 5 ou 6, le corps de base céramique (30) présentant un volume qui est choisi dans la plage de 0,03 cm³ inclus à 0,23 cm³ inclus.

8. Composant selon l'une quelconque des revendications 5 à 7, le corps de base céramique (30) présentant une résistance R₂₅ qui est choisie dans une plage de 2 000 Ω à 3 000 Ω, et présentant une valeur B qui est choisie dans une plage de 3 500 K à 4 300 K.

9. Composant selon l'une quelconque des revendications 5 à 8, présentant en outre une encapsulation, l'encapsulation contenant du verre ou un polymère.

10. Procédé pour la préparation d'un composant selon les revendications 5 à 9, doté des étapes de
- préparation d'une poudre qui contient des matériaux de départ du matériau céramique,
- préparation d'une feuille à partir de la poudre,
- préparation de substrats contenant le matériau céramique à partir de la feuille, et
- séparation des substrats.

11. Procédé selon la revendication précédente, où pour la préparation de la poudre, des matériaux de départ de l'au moins un dopant sous forme d'oxydes, d'hydroxydes, de carbonates, de nitrates, de sulfates et/ou d'oxalates sont ajoutés aux autres matériaux de départ.
